(19) **Europäisches Patentamt / European Patent Office / Office européen des brevets**

(11) **EP 4 708 370 A1**

(12) **EUROPEAN PATENT APPLICATION**
published in accordance with Art. 153(4) EPC

(43) Date of publication:
**11.03.2026 Bulletin 2026/11**

(21) Application number: **24846020.6**

(22) Date of filing: **24.07.2024**

(51) International Patent Classification (IPC):
**H01M 4/04** *(2006.01)* **G01B 21/04** *(2006.01)*

(52) Cooperative Patent Classification (CPC):
**G01B 21/04; H01M 4/04**

(86) International application number:
**PCT/KR2024/010655**

(87) International publication number:
**WO 2025/023718 (30.01.2025 Gazette 2025/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.07.2023 KR 20230097671**

(71) Applicant: **LG Energy Solution, Ltd.**
**Seoul 07335 (KR)**

(72) Inventors:
• **KIM, Woo Jae**
  **Daejeon 34122 (KR)**
• **KIM, Min Su**
  **Daejeon 34122 (KR)**
• **CHOI, Ee Beom**
  **Daejeon 34122 (KR)**

(74) Representative: **BCKIP Part mbB**
**MK1**
**Landsbergerstraße 98, 3.Stock**
**80339 München (DE)**

(54) **ROLL MAP CREATION SYSTEM**

(57) A roll map creation system includes an inspection measurement device for moving electrodes represented by the first roll map created in the preceding process from the unwinder to the rewinder and inspecting the electrodes to obtain inspection and/or measurement data; and a roll map creation device for creating a second roll map by assigning coordinates to the electrodes, and matching the inspection and/or measurement data according to the coordinates of the electrodes, where the roll map creation device is configured to create correction data of the difference in lengths when the first roll map length (A) and the second roll map length (B) differ.

[FIG. 4]

## Description

[Cross-Reference to Related Applications]

This is entry into the European regional phase based on International Application PCT/KR2024/010655 filed on July 24, 2024, which claims the benefit of priority from Korean Patent Application No. 10-2023-0097671, filed on July 26, 2023, the disclosures of which are incorporated herein by reference.

[Technical Field]

The present disclosure relates to a roll map creation system, and more specifically to a roll map creation system that may achieve accurate cell traceability even as the length of an electrode roll increases during a roll-to-roll process.

[Background]

With the technological development and increasing demand for electric vehicles, the demand for secondary batteries is also increasing rapidly. Lithium secondary batteries are widely used as an energy source for various electronic products, including mobile devices, due to their high energy density and operating voltage, as well as their excellent storage and lifetime characteristics.

In the battery manufacturing process, which includes the electrode process and the assembly process, it may be necessary to trace back through the entire process in the event of an issue with a semi-finished or finished battery, such as a defect. This means identifying which process each component of the battery cell that is being traced originated from.

To make it easier to determine the cause of defects, there is a need for cell traceability in the complex battery manufacturing process.

The background description provided herein is for the purpose of generally presenting context of the disclosure. Unless otherwise indicated herein, the materials described in this section are not prior art to the claims in this application and are not admitted to be prior art, or suggestions of the prior art, by inclusion in this section.

[Summary]

The present disclosure is to provide a roll map creation system that enables accurate cell traceability even as the length of the electrode roll differs during the roll-to-roll process.

To accomplish the above technical task, the present disclosure provides a roll map creation system including: an inspection measurement device for inspecting an electrode to obtain inspection and/or measurement data while moving the electrode represented by a first roll map from an unwinder to a rewinder, the first roll map being created in the preceding process; and a roll map creation device for creating a second roll map by assigning coordinates to the electrode, and matching the inspection and/or measurement data according to the coordinates of the electrode, wherein the roll map creation device is configured to create correction data of the difference in lengths when the first roll map length (A) and the second roll map length (B) differ from each other.

In some embodiments, the roll map creation device may be configured to map any coordinate (C) of the first roll map to a new correction coordinate (M) according to Formula (1), and the correction data may include the new correction coordinate (M).

$$M=(B \cdot C)/A \qquad (1)$$

In some embodiments, the roll map creation device may be configured to create an overlay roll map matching the first roll map and the second roll map using the correction data.

In some embodiments, each of the first roll map and the second roll map includes an absolute coordinate including coordinate values of both the electrode removal portion and the survival electrode portion remaining unremoved, and a relative coordinate including coordinate values of the survival electrode portion, wherein the roll map creation device is configured to map any absolute coordinate (C) of the first roll map to a new correction coordinate (M) according to Formula (1), the correction data including the new correction coordinate (M).

In some embodiments, the roll map creation device may be configured to create the overlay roll map by matching the new correction coordinates (M) with absolute coordinates of the second roll map.

In some embodiments, the roll map creation device may be configured to update the relative coordinates of the first roll map using the correction data.

In some embodiments, the inspection measurement device may include an unwinder encoder and a rewinder encoder capable of measuring a length of an electrode.

In some embodiments, the length (B) of the second roll map may be the length of the electrode determined by the rewinder encoder.

In some embodiments, the correction data may be configured to be generated after the rewinder has wound all of the electrode.

In some embodiments, the roll map creation device may be configured to add correction data of a difference between an electrode length determined by the unwinder and an electrode length determined by the rewinder to the first roll map.

In some embodiments the preceding process may be an electrode coating process, the first roll map may be a roll map for the electrode coating process, and the second roll map may be a roll map for a roll-press process.

Another aspect of the present disclosure provides a roll map creation system including: an inspection measurement device for inspecting an electrode to obtain inspection and/or measurement data while moving the electrode represented by a first roll map from an unwinder to a rewinder, the first roll map being created in the preceding process; and a roll map creation device for creating a second roll map by assigning coordinates to the electrodes, and matching the inspection and/or measurement data according to the coordinates of the electrode, wherein, when the first roll map length (A) and the second roll map length (B) differ from each other, the roll map creation device is configured to add correction data of the difference in lengths to the first roll map.

In some embodiments, the roll map creation device may be configured to map any coordinate (C) of the first roll map to a new correction coordinate (M) according to Formula (1), the correction data including the new correction coordinate (M).

$$M=(B \cdot C)/A \qquad (1)$$

In some embodiments, each of the first roll map and the second roll map includes an absolute coordinate including coordinate values of both the electrode removal portion and the survival electrode portion remaining unremoved, and a relative coordinate including coordinate values of the survival electrode portion, wherein the first roll map length (A) and the second roll map length (B) may each be lengths based on the absolute coordinates.

In some embodiments, the roll map creation device may be configured to create an overlay roll map matching the first roll map and the second roll map using the correction data.

According to another aspect of the present disclosure, a roll map creation method includes: storing a first roll map of the preceding process; storing a second roll map of a process subsequent to the preceding process; and creating a correction data of the difference in length if the first roll map length (A) and the second roll map length (B) differ from each other.

In some embodiments, the step of creating correction data may include mapping any coordinate © of the first roll map to a new correction coordinate (M) according to Formula (1).

In some embodiments, the method further includes creating an overlay roll map matching the first roll map with the second roll map using the correction data.

The roll map creation system of the present disclosure has the effect of ensuring accurate cell traceability even as the length of the electrode roll differs during the roll-to-roll process.

The effects that may be obtained from the exemplary embodiments of the present disclosure are not limited to those mentioned above, and other effects not mentioned may be clearly derived and understood by one of ordinary skill in the art to which the exemplary embodiments of the present disclosure belong from the following description. That is, unintended effects of practicing the exemplary embodiments of the present disclosure may also be derived from the exemplary embodiments of the present disclosure by one of ordinary skill in the art.

[Brief Description of the Drawings]

FIG. 1 is a conceptual perspective view of the state of an electrode going through the electrode manufacturing process.
FIG. 2 is a conceptual representation of a roll map created in an electrode manufacturing process according to one embodiment of the present disclosure.
FIG. 3 is a schematic diagram conceptually illustrating a roll-to-roll process device and a roll map creation system according to one embodiment of the present disclosure.
FIG. 4 is a schematic diagram conceptually illustrating the change in length of a roll map going through the roll-to-roll process.
FIG. 5 is a conceptual diagram illustrating the relationship between the overlay roll map and the first and second roll maps.
FIG. 6 is a schematic diagram illustrating relative and absolute coordinates on an exemplary visualized roll map.

[Detailed Description]

Hereinafter, preferred embodiments of the concept of the present disclosure will be described in detail with reference to the accompanying drawings. However, embodiments of the present disclosure may be modified in many other forms, and it should not be construed that the scope of the present disclosure is limited by the embodiments described below. It is preferred that the embodiments of the concept of the present disclosure be construed as being provided to more fully explain the inventive concept to one of ordinary skill in the art. Like designations generally refer to like elements. Furthermore, various elements and areas in the drawings are schematically depicted. Accordingly, the concept of the present disclosure is not limited by the relative sizes or spacing depicted in the accompanying drawings.

Terms such as "first," "second," and the like may be used to describe various components, but the components are not limited by such terms. These terms are used for the purpose of distinguishing one component from another. For example, a first component may be named a second component, and vice versa, a second component may be named a first component, without departing from the scope of the concept of the present disclosure.

The terms used in this application are used to describe certain embodiments and are not intended to limit the concept of the present disclosure. Singular expressions include the plural unless the context clearly indicates otherwise. In this application, expressions such as "includes" or "has" are intended to designate the presence of the features, counts, steps, operations, components, parts, or combinations thereof described, and are not to be understood as precluding the possibility of the presence or addition of one or more other features, counts, operations, components, parts, or combinations thereof.

Unless otherwise defined, all terms used herein, including technical and scientific terms, may have the same meaning as commonly understood by one of ordinary skill in the art to which the concept of the present disclosure belongs. It is further understood that such terms, as commonly used and as defined in dictionaries, may be construed to have a meaning consistent with their meaning in the context of the art to which they relate, and may not to be construed in an unduly formal sense unless expressly defined herein.

When an embodiment can be instantiated differently, certain processes may be performed in a sequence other than that described. For example, two successively described processes may be performed substantially simultaneously, or in the opposite order from the order described.

In the accompanying drawings, variations in the depicted geometries may be expected, for example, due to manufacturing techniques and/or tolerances. Accordingly, embodiments of the present disclosure should not be construed as limited to the specific geometry of the areas shown herein, and should include, for example, variations in geometry resulting from manufacturing processes. All terms "and/or" used herein include each and every combination of one or more of the components mentioned. Further, as used herein, the term "substrate" may refer to the substrate itself, or to a laminated structure including the substrate and any predetermined layers or films formed on its surface. Further, as used herein, the term "surface of the substrate" may refer to the exposed surface of the substrate itself, or to the outer surface of a predetermined layer or film formed on the substrate.

**(First embodiment)**

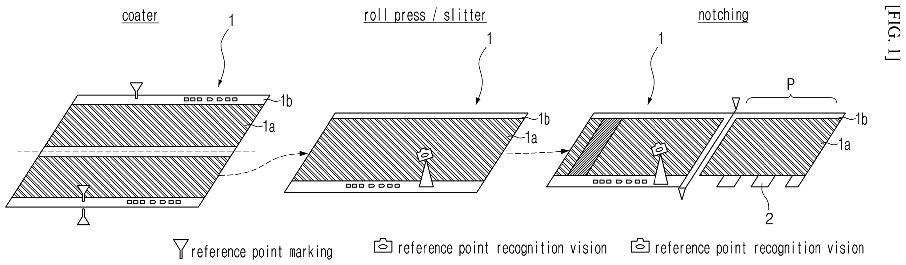

FIG. 1 is a conceptual perspective view of the state of an electrode going through the electrode manufacturing process.

Referring to FIG. 1, a coated electrode 1 is manufactured by the formation of a coated part 1a by coating an active material on a current collector at a coater C. The uncoated part 1b, which is not coated with the active material, may be marked with a reference point. In some embodiments, the active material may be coated on both the upper and back surfaces of the electrode 1. The coated electrode 1 may be pressed by a press roll in a roll-press process and cut along the longitudinal direction of the electrode 1 by a slitter in a slitting process.

The electrode tabs 2 may then be formed by being punched by a press or the like in a notching process. In the notching process, the electrode tabs 2 are formed per unit electrode so that they can be cut into the unit electrode to be manufactured into a battery cell or cut in a subsequent process. The width of the unit electrode corresponds to a pitch P processed by the press.

The electrode manufacturing process is accomplished through a series of roll-to-roll processes in which the electrodes unwound from the unwinder are transferred to the rewinder and wound on the rewinder in a sequentially repeated process. That is, the electrodes are transferred from the unwinder of the coating process to the rewinder to be coated and the electrodes are wound on the rewinder to complete the electrode roll of the coating process. Next, the electrode roll is mounted on the unwinder of the roll-press process and travels to the rewinder of the roll-press process. The electrode roll is wound on the rewinder of the roll-press process and is completed as an electrode roll of the roll-press process. Subsequently, the electrode roll may be unwound from the unwinder of a subsequent process (e.g., a second roll-press process, a slitting process, or a notching process) and, after a predetermined process, may be wound again in the rewinder of the subsequent process to complete the electrode roll of the subsequent process. As such, the electrode manufacturing process may include a series of roll-to-roll processes in which the electrodes unwound from the unwinder are moved and wound in the rewinder (so-called roll-to-roll processes), which are repeated sequentially.

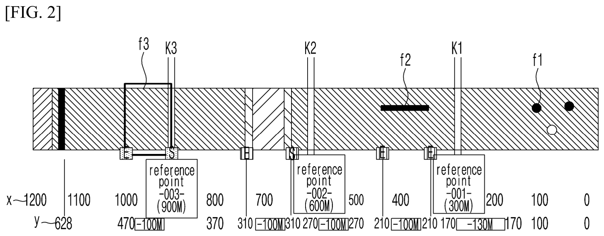

FIG. 2 is a conceptual representation of a roll map created in an electrode manufacturing process according to one embodiment of the present disclosure.

As described above, in coating processes, roll-press processes, slitting processes, and the like, the electrodes are performed in a roll-to-roll manner. A roll map simulates this performance of the electrode and may be represented in the form of a bar, wherein the longitudinal direction position and the width direction position of the electrode are represented by coordinates. That is, the roll map is defined on a coordinate plane having two coordinate axes, the longitudinal direction axis and the width direction axis of the electrode, and each position of the electrode on the coordinate plane may be represented by a coordinate value on the coordinate plane. Such a roll map may store information on defects, quality, electrode breakage, etc., occurring in the electrode manufacturing process along with the coordinates, thereby facilitating visualization of data related to quality or defects in the electrode manufacturing process at a glance.

Referring to FIG. 2, exterior defects such as pinhole defects f1 and line defects f2 are visualized in the coordinates where the defects occurred. Also shown are mismatch portions f3 of the coated and uncoated parts. Other loading amount defects are also shown, and the area where the electrode was discarded at the outermost part is also shown.

Furthermore, the electrode 1 may be marked with reference points K1, K2, K3 at a predetermined distance. If a break occurs in the electrode 1 and it is connected by a joint connecting member, the electrode length is reduced by the length of the break. As described earlier, points where exterior defects have occurred can also be removed so that the operator can connect them. The roll map may also simulate this situation and modify the coordinates on the roll map. Referring to FIG. 2, the coordinates without and with the electrode removal portion as described above are shown together in one roll map. The former is referred to as the absolute coordinate (x) and the latter as the relative coordinate (y). As shown in FIG. 2, the relative coordinates (y) and absolute coordinates (x) may be displayed in parallel on a single roll map, but they may also be displayed separately. The roll map displayed by the relative coordinate (y) represents the state of the real electrode.

Such a roll map may be created for each individual process described above. However, in the roll-to-roll process, the beginning and end of the electrode may be reversed during the roll-to-roll process, such that the end of the roll map representing the electrode roll of the preceding process becomes the beginning of the roll map representing the electrode roll of the subsequent process, since the electrode wound in the preceding process is unwound in the subsequent process. In addition, in the case of a double-sided electrode in which the electrode active material is coated on both sides of the electrode, the electrode surface may be reversed, such as the upper surface electrode in the preceding process becoming the lower surface electrode in the subsequent process. In other words, depending on the winding direction of the electrode in the preceding process and the unwinding direction of the electrode in the subsequent process, a beginning-to-end reversal and a surface reversal of the electrode may occur. Since the roll maps of each process are created based on these reversed electrodes, the coordinates of the roll maps of each process are also reversed from each other. Furthermore, during a series of roll-to-roll processes, the length of the electrode may be changed by cutting and connecting the electrode several times in the longitudinal direction, such as by removing defective or broken sections. The roll map of each process reflects these reversals and length changes, which may result in different coordinate values.

At the final process of the electrode process, only the remaining electrodes (survival electrodes) are left, excluding the parts of the electrodes removed in the previous process. Since the battery is manufactured as the survival electrode, if a problem occurs in a finished or semi-finished battery, the source of the problem may be traced by referring to the roll map of the final electrode. Furthermore, the roll map of each process described above may be referenced to trace back the electrode portion from which the problem originated. As such, the roll map is a useful tool for quality and defect identification as well as quality tracing.

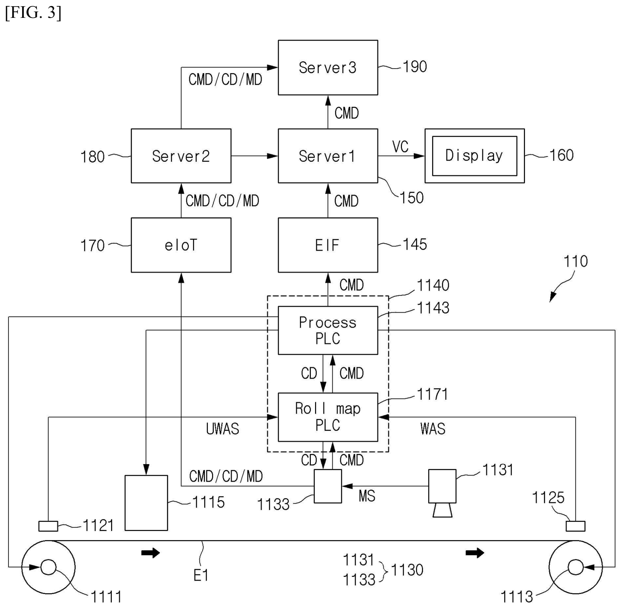

FIG. 3 is a schematic diagram conceptually illustrating a roll-to-roll process device and a roll map creation system according to one embodiment of the present disclosure.

Referring to FIG. 3, the roll-to-roll process device 110 may include an unwinder 1111, a rewinder 1113, a processing machine 1115, a first rotary encoder 1121, a second rotary encoder 1125, a measuring instrument 1130, and a process programmable logic controller (PLC) 1143.

An unwinder 1111 may be provided with an electrode roll manufactured in a previous electrode process, and the unwinder 1111 may be configured to unwind the electrode roll. A rewinder 1113 may be configured to wind the electrode E1 that has been unwound from the unwinder 1111 and processed in a corresponding roll-to-roll process. The roll-to-roll process may be, for example, but not limited to, a coating process, a roll-press process, a notching process, or the like.

A first rotary encoder 1121 may be configured to detect the extent to which the electrode has been unwound by the unwinder 1111. The first rotary encoder 1121 may be configured to be contact or contactless. In some embodiments, the first rotary encoder 1121 may be configured to sense the length by which the electrode has been unwound by the unwinder 1111. Accordingly, the first rotary encoder 1121 may be configured to generate an unwound amount signal (UWAS) representative of the length at which the electrode has been unwound and transmit it to a roll map PLC 1171, described in more detail hereinafter. The roll map PLC 1171 may be configured to collect unwound amount data based on the received unwound amount signal (UWAS).

A second rotary encoder 1125 may be configured to detect the extent to which the electrode is wound by the rewinder 1113. The second rotary encoder 1125 may be configured to be contact or contactless. In some embodiments, the second rotary encoder 1125 may be configured to sense the length by which the electrode is wound by the rewinder 1113. Accordingly, the second rotary encoder 1125 may be configured to generate a wound amount signal (WAS) representative of the length the electrode has been wound, and transmit it to a roll map PLC 1171, described in more detail hereinafter. The roll map PLC 1171 may be configured to collect wound amount data based on the received wound amount signal (WAS).

The measuring instrument 1130 may be configured to measure the electrode E1 to collect measurement data (MD) of the electrode E1 being transferred from the unwinder 1111 to the rewinder 1113. The measuring instrument 1130 may measure the electrode E1 in a scanning manner. In some embodiments, the measuring instrument 1130 may move along the width direction of the electrode E1. In some embodiments, during a single scan of the measuring instrument 1130, the measuring instrument 1130 may move from one end of the width direction of the electrode E1 to the other end of the width direction. While the measuring instrument 1130 is performing the width direction scanning, the electrode E1 may be moved in the longitudinal direction of the electrode by the unwinder 1111 and the rewinder 1113.

The processing machine 1115 may be any processing device capable of performing, for example, a coating process, a roll-press process, a notching process, or the like. For example, if the roll-to-roll process illustrated in FIG. 3 is a coating process, the processing machine 1115 may be a coater. For example, if the roll-to-roll process illustrated in FIG. 3 is a roll-press process, the processing machine 1115 may be a roll-press device. For example, if the roll-to-roll process illustrated in FIG. 3 is a notching process, the processing machine 1115 may be a notching device.

In some embodiments, where the processing machine 1115 is a roll-press device, the processing machine 1115 may include a pair of rollers configured to apply a predetermined pressure toward each other with the electrode E1 between them.

In some embodiments, where the processing machine 1115 is a notching machine, the processing machine 1115 may be a press device for notching, such as including a driving part configured to move a notching mold up and down in a certain number of cycles, wherein the notching mold may punch the edge of the electrode E1 as it descends to form a lead tab of a predetermined shape (e.g., rectangular).

The measurement data MD may include test results expressed numerically. For example, the measurement data MD may include coordinates and dimensions of a notched portion on the electrode E1. In some embodiments, the measurement data MD may further include loading amount data of the coating material on the electrode, dimensional data such as the width of the insulating material provided on the coating material and the overlap width between the coating material and the insulating material, and mismatching data between the coated part lanes on the upper surface of the electrode and the coated part lanes on the lower surface of the electrode. Here, the loading amount indicates the amount of coating material loaded per unit area of the electrode E1, which may be an area density of the coating material. The measurement data MD may be processed in a predetermined manner, such that the positive or negative of the measured portion of the electrode may be determined.

The measuring instrument 1130 may include a sensing part 1131 and a processing part 1133. The sensing part 1131 may be configured to sense a physical quantity at the electrode E1 to generate a measurement signal MS. For example, the sensing part 1131 may include a time delay and integration (TDI) camera, a complementary metal oxide semiconductor (CMOS) image sensor, a time of flight (TOF) sensor, and the like. The sensing part 1131 may also include an emitter and receiver configured to perform measurements using nondestructive signals, such as ultrasound, microwaves, terahertz waves, infrared light, and the like. In some embodiments, the sensing part 1131 may include analog and/or digital sensors, such as biosensors, chemical sensors, composition sensors, current and/or power meters, air quality sensors, gas sensors, Hall effect sensors, brightness level sensors, light sensors, etc. In some embodiments, the measuring instrument 1130 may include pressure sensors, temperature sensors, ultrasonic sensors, proximity sensors, door status sensors, motion tracking sensors, humidity sensors, visible light and infrared sensors, cameras, etc.

The roll-to-roll process device 110 may further include an inspection device configured to inspect the electrode E1 to collect inspection data. The inspection data may include a determination of the quality of a portion of the electrode E1 and a process event. For example, the inspection data may include data of the appearance of the electrode collected by an image-based device, such as a machine vision, for example, data of breaks and joints in the electrode, data of a portion of the electrode on which a sampling inspection was performed, data of a portion of the electrode scheduled for scrap, data of the scrapped portion of the electrode, data on the defects on coating material and insulating material on the electrode, data on reference points indicating the location of the electrode, and defect data such as pinhole defects, crater defects, line defects, crack defects, sideling defects, island defects, fold defects, crease defects, dent defects, and stab defects. The reference points may be formed at a predetermined distance on the electrode, and the location of other elements on the electrode may be located based on the reference points. The inspection device may be any one of a color sensor, a joint sensor, a reference point sensor, a machine vision, etc.

The measurement data (MD) and inspection data described above may be time series data. The measurement data (MD) and inspection data may be temporally ordered. Temporal ordering is a key characteristic of time series data, organizing events in the order in which they occur and arrive for processing. In other words, the measurement data (MD) and inspection data may be stored based on when measurements and inspections were performed, and the measurement data (MD) and inspection data may be associated with time. Further, the measurement data (MD) and inspection data may be associated with a position on the electrode determined based on the reference point.

The processing part 1133 may be configured to collect the measurement signals MS sensed by the sensing part 1131 to generate the measurement data MD. The processing part 1133 may be wired or wirelessly connected to the sensing part 1131.

The roll map PLC 1171 may be in operative communication with the first and second rotary encoders 1121, 1125, the measuring instrument 1130, and additional measuring instruments and inspection devices via a wired or wireless data network. The data network may be one-way or two-way. The data network may be instantiated by a public and/or specialized network using physical channels, WiFi, Bluetooth, and/or other frequency bands. The first and second rotary encoders 1121, 1125, measuring instrument 1130, and additional measuring instruments and inspection devices may be configured to collect data from, or generate signals for the collection of data from, equipment, workpieces, semi-finished products, and products within the roll-to-roll process device 110.

The roll map PLC 141 may be configured to send coordinate data CD to the processing part 1133. The processing part 1133 may be configured to associate the measurement data MD with the coordinate data CD to generate coordinate-associated measurement data CMD. In general, the measurement data MD may be processed based on trigger points. Examples of processing the measurement data MD may include storing the measurement data MD, manipulating the measurement data MD (e.g., generating the coordinate-associated measurement data CMD, and transmitting the measurement data MD.

As a non-limiting example, the trigger point for processing the measurement data MD may be the completion of scanning. For example, the sensing part 1131 may scan the electrode in the width direction of the electrode, and for each scan, the measurement data MD may be stored, processed, modulated, and transmitted. In other examples, the trigger point may be the completion of a plurality of scans, or the completion of a portion of a scan.

The processing part 1133 may be configured to transmit the coordinate-associated measurement data CMD to the roll map PLC 1171. The roll map PLC 1171 may be configured to transmit the coordinate-associated measurement data CMD to the process PLC 1143.

Coordinate-associated measurement data CMD sent to the process PLC 1143 may be delivered to the first server 150 via the process PLC 1143 and the equipment interface (EIF) 145. The process PLC 1143 and EIF 145 may relay communication of data, including measurement data (CMD), between the first server 150 and the roll map PLC 1171. However, it is not limited thereto, and the roll map PLC 1171 may also be configured to transmit coordinate-associated measurement data (CMD) directly to the first server 150.

The process PLC 1143 may be configured to control the operation of the unwinder 1111, the rewinder 1113, and the processing machine 1115. The process PLC 1143 may be configured to generate signals for starting and stopping the operation of the unwinder 1111, the rewinder 1113, and the processing machine 1115.

In some embodiments, each of the roll map PLC 1171 and the process PLC 1143 may be part of a single PLC, the first PLC 1140.

For control of the roll-to-roll process illustrated in FIG. 3, a communication channel may be installed between the process PLC 1143 and the first server 150, connecting the process PLC 1143 and the first server 150 via the EIF 145. Accordingly, compared to the case in which the first and second rotary encoders 1121, 1125 and the measuring instrument 1130 transmits unwound amount signal (UWAS), wound amount signal (WAS), and measurement signal (MS) directly to the first server 150, and the case in which the roll map PLC 1171 transmits measurement data CMD directly to the first server 150, data transmission via the process PLC 1143 may reduce the resources required for installing communication channels and streamline data processing and management.

The EIF 145 may be a device for communication between the process PLC 1143 of a manufacturing facility and the first server 150, which is a parent server.

In some embodiments, the first server 150 may store a first roll map created for a preceding process. The first roll map may be created by the first server 150 for the preceding process, or may be created by a roll map PLC of the preceding process. The first roll map represents electrode rolls wound in the preceding process, the electrode rolls being wound in the preceding process and then provided to the unwinder 1111 for the roll-to-roll process shown in FIG. 3.

In some embodiments, the first server 150 may include a roll map creating part configured to generate a second roll map. The second roll map may be a simulation of the process data of the electrode E1 on a plane simulating the electrode E1 moving between the unwinder 1111 and the rewinder 1113. In this case, the first server 150 may act as a roll map creating device.

In some embodiments, the roll map PLC 1171 may include a roll map creating part configured to generate the second roll map. In this case, the roll map PLC 1171 may act as a roll map creating device. In the following, the case where the first server 150 creates the second roll map will be described. However, the roll map PLC 1171 may also be configured to create a second roll map in an identical, equivalent, or analogous manner to the configuration associated with the first server 150 creating the second roll map.

The second roll map may be generated on a lot-by-lot basis formed by winding and cutting of the electrode E1. The second roll map may include data on specifications of the lots. The specifications of the lot may include, for example, the lot number, the length of the wound electrode, the width of the electrode, and the material and composition used to process the electrode.

In some embodiments, the preceding process may be an electrode coating process and the roll-to-roll process illustrated in FIG. 3 may be a roll-press process. In this case, the first roll map may be a roll map for the electrode coating process, which is the preceding process, and the second roll map may be a roll map for the roll-press process.

In other embodiments, the preceding process may be a roll-press process and the roll-to-roll process illustrated in FIG. 3 may be a notching process. In this case, the first roll map may be a roll map for the roll-press process, the preceding process, and the second roll map may be a roll map for the notching process.

The first server 150 may match the coordinate positions of the second roll map generated with the coordinate positions of the first roll map. This will be described in more detail hereinafter.

According to exemplary embodiments, the first server 150 may be a data processing system that supports various activities necessary to manage the manufacturing of a secondary battery, such as job scheduling, work ordering, quality control, job performance aggregation, and the like. The first server 150 may be, for example, a manufacturing execution system (MES). The first server 150 may be configured to perform input, processing, output, and communication of data required for electrode assembly, such as notching processes, cutting processes, and stacking processes.

In some embodiments, the first roll map may include information regarding the length of the electrode wound in the preceding process. In some embodiments, the length A of the electrode in the first roll map may be a length measured by a rotary encoder provided on the rewinder in the preceding process. In some other embodiments, the length A of the electrode of the first roll map may be a length measured by a first rotary encoder 1121 provided on the unwinder 1111 of the roll-to-roll process device 110 shown in FIG. 3.

The second roll map may include information regarding the length of the electrode wound on the rewinder 1113. In some embodiments, the length B of the electrode in the second roll map may be a length measured by a second rotary encoder 1125 provided on the rewinder 1113.

The length A of the electrode of the first roll map may not necessarily be the same as the length B of the electrode of the second roll map. The electrode E1 may be subjected to longitudinal tension as it progresses from the unwinder 1111 toward the rewinder 1113. As a result, the length of the electrode E1 measured on the unwinder 1111 and the length of the electrode measured on the rewinder 1113 may differ.

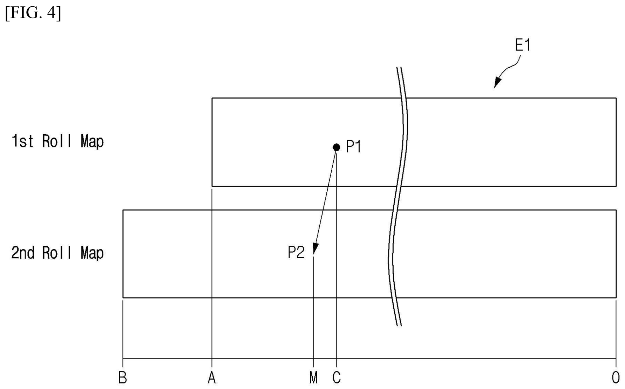

FIG. 4 is a schematic diagram conceptually illustrating the change in length of a roll map changes as it goes through the roll-to-roll process.

Referring to FIG. 4, a first roll map before the roll-to-roll process and a second roll map after the roll-to-roll process are arranged.

The first roll map is a roll map created for an electrode that has gone through the preceding process of the roll-to-roll process shown in FIG. 3. The second roll map is a roll map created for an electrode that has gone through the roll-to-roll process shown in FIG. 3. The first roll map may have a first length A and the second roll map may have a second length B.

As described above, the second length B may be longer than the first length A because the second roll map is subjected to tension in the longitudinal direction during the roll-to-roll process. The difference between the lengths of the first roll map and the second roll map may be B-A. Since the length A of the first roll map and the length B of the second roll map are different, it may be unreasonable to directly correspond coordinates on the first roll map to find a corresponding position on the second roll map for any position on the first roll map.

The electrode represented by the first roll map may be considered to change in length proportionally and uniformly throughout as it undergoes the roll-to-roll process illustrated in FIG. 3. In other words, assuming that as the roll-to-roll process is performed on the electrode represented by the first roll map, a constant tension is applied to the electrode as a whole, and if so, it may be assumed that the length change of the electrode also occurs proportionally.

Considering the above, it may be possible to map a position on the second roll map corresponding to any position on the first roll map. Specifically, assume that due to a change in the length of the electrode E1, position P1 on the first roll map moves to position P2 on the second roll map, with position P1 on the first roll map having coordinate C in the longitudinal direction and position P2 on the second roll map having coordinate M in the longitudinal direction.

Assuming that the second roll map is longer than the first roll map, the longitudinal coordinate C of position P1 has moved proportionally to the longitudinal coordinate M of position P2. In other words, the proportional expression A:B=C:M is established, and the longitudinal coordinate M of position P2 may be obtained as shown in Formula (1) below.

$$M=(B \cdot C)/A \qquad (1)$$

The roll map creation device may be configured to map the longitudinal coordinate C on the first roll map to the longitudinal coordinate M on the second roll map. In some embodiments, the roll map creation device may separately create and store the new correction coordinate, coordinate M, as correction data.

The correction data may be provided in addition to the data of the first roll map. In some embodiments, the data of the first roll map may include time series coordinate data, measurement data, evaluation data, coordinate-associated measurement data, and the like. The correction data may be stored in addition to the data of the first roll map. The correction data may be stored within the first server 150.

The correction data may be generated after the electrode has completed winding in the rewinder 1113 shown in FIG. 3. After the electrode is wound in the rewinder 1113 can the measurement of the length B of the electrode of the second roll map by the second rotary encoder 1125 be completed. Correction data may then be generated using the electrode length B.

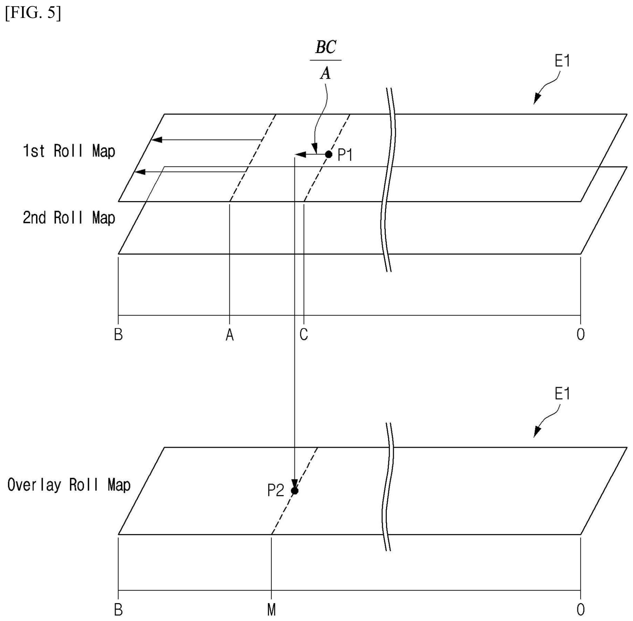

In some embodiments, the roll map creation device may be configured to create an overlay roll map using the correction data. FIG. 5 is a conceptual diagram illustrating a relationship between the overlay roll map and the first roll map and the second roll map.

Referring to FIG. 5, the overlay roll map may be a roll map that is integrated into one by matching the first roll map and the second roll map. The overlay roll map may be a roll map created in addition to the first roll map and the second roll map.

In some embodiments, the overlay roll map may be created by the roll map creation device. In some embodiments, the overlay roll map may be created by the first server 150.

The roll map creation device may create an overlay roll map by mapping a longitudinal coordinate C of any position P1 on the first roll map and coordinate data, measurement data, evaluation data, coordinate-associated measurement data, etc., corresponding to the position P1 to a longitudinal coordinate M of a corresponding position P2 on the second roll map.

The overlay roll map may include coordinate data, measurement data, evaluation data, and coordinate-associated measurement data on the second roll map. The overlay roll map may further include coordinate data, measurement data, evaluation data, and coordinate-associated measurement data on the first roll map corresponding to each coordinate data on the second roll map.

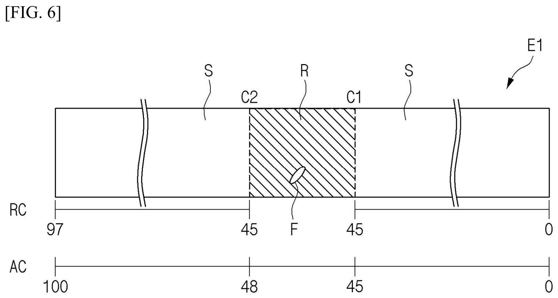

Any position of an electrode on the roll map and the length of the electrode may be represented by coordinates on the electrode. FIG. 6 is a schematic diagram illustrating relative and absolute coordinates on an exemplary visualized roll map.

Referring to FIG. 6, the roll map representing the electrode E1 has a shape extending in the longitudinal direction and may have coordinates in the longitudinal direction depending on its position in the longitudinal direction. The electrode E1 may have an absolute coordinate AC and a relative coordinate RC in the longitudinal direction.

With respect to the absolute coordinate AC of the electrode E1 shown in FIG. 6, the right end of the electrode E1 can be labeled as 0 and the left end as 100. However, the setting of these coordinates is for convenience only, and one of ordinary skill in the art will understand that the coordinates of the electrodes can be arbitrarily assigned as needed.

However, during the process of processing the electrode E1, a defect F may occur in the middle. In order to eliminate the defect F, a portion in which the defect F has occurred may be removed. By removing the portion where the defect F occurs, the overall length of the electrode E1 is correspondingly shortened. In FIG. 6, an example of removing a section between coordinate 45 and coordinate 48 of the absolute coordinate AC due to a defect F occurring between coordinate 45 and coordinate 48 of the absolute coordinate AC is shown.

To remove the section between coordinate 45 and coordinate 48 in the absolute coordinate AC, a first cutting part C1 may be formed to cut the electrode E1 in a width direction at coordinate 45 in the absolute coordinate AC, and a second cutting part C2 may be formed to cut the electrode E1 in a width direction at coordinate 48 in the absolute coordinate AC.

By removing the section between the first cutting part C1 and the second cutting part C2, i.e., the section between coordinate 45 and coordinate 48 in the absolute coordinate AC, the first cutting part C1 and the second cutting part C2 can be connected to each other. Thus, the point at coordinate 48 in the absolute coordinate AC merges with the point at coordinate 45 in the absolute coordinate AC and has relative coordinate 45.

A coordinate 45 in the absolute coordinate AC can also have a coordinate 45 in the relative coordinate RC if there is no removed section between coordinate 0 and coordinate 45 in the absolute coordinate AC. However, because the section between coordinate 45 in AC and coordinate 48 in AC has been removed, coordinate 48 in AC can have coordinate 45 in RC. In addition, the section from coordinate 48 to coordinate 100 in the absolute coordinate AC has coordinate 45 to coordinate 97 in the relative coordinate RC. That is, the relative coordinate RC has a reduced coordinate value by the length of the previously removed electrode compared to the absolute coordinate AC.

That is, the absolute coordinate AC of the electrode E1 may include both the coordinate values of the electrode removal portion R of the electrode E1 and the coordinate values of the survival electrode portion S that remains unremoved. Also, the relative coordinate RC of the electrode E1 may include only the coordinate value of the survival electrode portion S.

Referring again to FIGS. 4 and 5, the length A of the first roll map and the length B of the second roll map may be lengths based on the absolute coordinate AC. Thus, when matching any position P1 on the first roll map to a corresponding position P2 on the second roll map according to Formula (1) above, the length A of the first roll map, the length B of the second roll map, and the coordinate C of the longitudinal direction of any position P1 on the first roll map may all be lengths and coordinates based on absolute coordinates.

As described above, the correction data may be provided in addition to the data of the first roll map. In some embodiments, the correction data may be stored correlated with corresponding coordinates of the first roll map.

In some embodiments, the roll map creation device may use the correction data to update the relative coordinates of the first roll map. In some embodiments, after reading the absolute coordinates corresponding to each relative coordinate of the first roll map, the roll map creation device may use the correction data to calculate the absolute coordinates of the second roll map corresponding to the absolute coordinates of the first roll map. Then, the roll map creation device may read the relative coordinates corresponding to the absolute coordinates of the second roll map and correspond them to the relative coordinates of the first roll map.

Referring again to FIG. 3, the first server 150 may generate a visualization command (VC) to visualize the second roll map. The first server 150 may communicate the visualization command (VC) to the display device 160, and the display device 160 may visualize the second roll map to display the visualized second roll map.

In some embodiments, the processing part 1133 may be configured to deliver coordinate-associated measurement data CMD and/or coordinate data CD to the second server 180. According to exemplary embodiments, the coordinate-associated measurement data CMD and coordinate data CD may be delivered to the second server 180 via the eIoT 170. The eIoT 170 may be a device for communication between the processing part 1133 and the second server 180.

In some embodiments, the second server 180 may be configured to store and process the measurement data MD of the electrodes. The second server 180 may continuously monitor the processing of the electrodes based on the measurement data MD, thereby controlling the quality of the processing of the electrodes. According to exemplary embodiments, the second server 180 may be a statistical process controller (SPC). By collecting and analyzing manufacturing data in real or near real-time, the second server 180 may timely identify problem conditions and provide alarms to operators before potential problems occur.

The third server 190 may be configured to store coordinate-associated measurement data CMD transmitted from the first server 150. The third server 190 may be configured to store measurement data MD transmitted from the second server 180. If the first server 150 is an MES and the second server 180 is an SPC, they may be unsuitable for long-term storage of coordinate-associated measurement data CMD, evaluation data ED, and measurement data MD. The third server 190 may be a data warehouse, for example, and may store coordinate-associated measurement data CMD, evaluation data ED, and measurement data MD for a long period of time based on the quality assurance period of the product, and the like.

The processing part 1133, roll map PLC 1171, process PLC 1143, EIF 145, first server 150, eIoT 170, second server 180, and third server 190 may be instantiated as hardware, firmware, software, and combinations thereof. For example, the processing part 1133, the roll map PLC 1171, the process PLC 1143, the EIF 145, the first server 150, the eIoT 170, the second server 180, and the third server 190 may include computing devices such as general purpose computers, workstation computers, desktop computers, laptop computers, tablet computers, and the like.

The processing part 1133, the roll map PLC 1171, the process PLC 1143, the EIF 145, the first server 150, the eIoT 170, the second server 180, and the third server 190 may include any of a simple controller, a complex processor such as a microprocessor, a CPU, a GPU, or the like, a processor configured by software, and dedicated hardware and firmware. The processing part 1133, roll map PLC 1171, process PLC 1143, EIF 145, first server 150, eIoT 170, second server 180, and third server 190 may be instantiated by, for example, general purpose processors or application specific hardware such as digital signal processors (DSPs), field programmable gate arrays (FPGAs), and application specific integrated circuits (ASICs).

The first server 150 and the second server 180 may generate the second roll map and the intermediate roll map. Because the first server 150 stores and processes a lot of data for general manufacturing management other than the second roll map, the second roll map stored on the first server 150 may include processed and simplified coordinate-associated measurement data CMD instead of original measurement data MD. The second server 180 may store the original measurement data MD to operate as an SPC. The second server 180 may transmit measurement data MD corresponding to a selected portion of the second roll map in response to a command from the first server 150.

The intermediate roll map may further include measurement data MD associated with the second roll map, i.e., the intermediate roll map may further include, in addition to the second roll map, measurement data MD that is source data. The measurement data MD may be associated with the second roll map based on a time value. Accordingly, the intermediate roll map may provide additional insight into the quality of the workpiece, performance of the process, overall equipment effectiveness (OEE) drill down, anomaly detection, traceability, preventive maintenance, and predictive alerts.

The first server 150, second server 180, and third server 190 may include a physical server or a cloud server. The first server 150, second server 180, and third server 190 may provide data and analytics results to the operator via various frameworks. The frameworks may include protocols that support data transfer to allow the display device 160 to visualize the data via a user interface and provide updated visualizations as new data is calculated by the first server 150 and second server 180. The protocol supporting the data transmission may use HTML, JavaScript, and/or JSON.

The first server 150, second server 180, and third server 190 may include various application programming interfaces (APIs) for storing data in databases and other data management tools. The APIs may also be used for retrieval of data from databases of various data management systems. Data management systems may provide access to databases, pull data from databases, retrieve data, and generate metrics. In this context, metrics are tools for visualizing data. Metrics include time-series generated measurements and may be used to monitor applications and generate status alerts.

The roll-to-roll process device 110 may instantiate a plug-in architecture with APIs for data acquisition to provide plug-and-play connectivity of the measuring instrument 1130 and additional measuring instruments and inspection devices. Accordingly, resources at a particular process step and at a particular site may be easily transferred to other processes and other sites, or new resources may be easily introduced at each process step and site.

The data network between the elements of the roll-to-roll process device 110 may include various types of communication channels, including one-way, two-way wired, and wireless communication. In one example, the data network may include an industrial protocol network such as OPC, Modbus, ProfiNet, or the like. The communication channels can be dedicated conduit communications such as Universal Serial Bus (USB), IEEE 802 (Ethernet), IEEE 1394 (FireWire), or other high-speed data communication standards.

In some embodiments, the roll-to-roll process device 110 may further include a manual input system that allows an operator to input manufacturing data. The roll-to-roll process device 110 may allow for computer-based input of manufacturing data, such as operator data input using an input tool and scraping an excel file.

According to some embodiments, the operations of the processing part 1133, the roll map PLC 1171, the process PLC 1143, the EIF 145, the first server 150, the eIoT 170, the second server 180, and the third server 190 may be instantiated as commands stored on a machine-readable medium that can be read and executed by one or more processors. Here, the machine-readable medium may include any mechanism for storing and/or transmitting information in a form readable by a machine (e.g., a computing device). For example, the machine-readable medium may include read only memory (ROM), random access memory (RAM), magnetic disk storage media, optical storage media, flash memory, electrical, optical, acoustic, or other forms of propagated signals (e.g., carrier waves, infrared signals, digital signals, etc.), and any other signals.

The processing part 1133, roll map PLC 1171, process PLC 1143, EIF 145, first server 150, eIoT 170, second server 180, and third server 190 may be configured with firmware, software, routines, and commands to perform any of the foregoing operations, or any of the processes described below. For example, the firmware, software, routines, and commands of the processing part 1133, the roll map PLC 1171, the process PLC 1143, the EIF 145, the first server 150, the eIoT 170, the second server 180, and the third server 190 may be instantiated in memory.

The processing part 1133 may include, for example, software configured to receive coordinate data CD, generate coordinate-associated measurement data CMD, and transmit measurement data MD, coordinate data CD, and coordinate-associated measurement data CMD.

The roll map PLC 1171 may include, for example, software configured to collect coordinate data CD, receive coordinate-associated measurement data CMD, and transmit coordinate data CD and coordinate-associated measurement data CMD.

The process PLC 1143 may include software configured to generate control signals for controlling the unwinder 1111, rewinder 1113, and processing machine 1115 based on the product ID and product recipe, receive coordinate data CD and coordinate-associated measurement data CMD, and transmit coordinate data CD and coordinate-associated measurement data CMD.

The EIF 145 may include software for relaying the transmission of data and information between the process PLC 1143 and the first server 150. More specifically, the EIF 145 may include software configured to perform flow control, error control, synchronization, sequence control, addressing, multiplexing, routing, and format conversion of communications between the process PLC 1143 and the first server 150.

The first server 150 may include, for example, software configured to communicate the product ID and product recipe to the process PLC 1143 and generate the second roll map based on the coordinate-associated measurement data CMD.

The eIoT 170 may include software configured to collect, store, process, and transmit time series data, such as measurement data MD, coordinate data CD, and/or coordinate-associated measurement data CMD.

The second server 180 may include software configured to store time series data, coordinate data CD, and/or coordinate-associated measurement data CMD, such as measurement data MD, monitor the process based on the time series data, coordinate data CD, and/or coordinate-associated measurement data CMD, and transmit the time series data, coordinate data CD, and/or coordinate-associated measurement data CMD in response to a request from the first server 150.

The third server 190 receives and stores the coordinate-associated measurement data CMD, evaluation data ED, and/or measurement data MD, and may include software configured to retrieve the coordinate-associated measurement data CMD, evaluation data ED, and/or measurement data MD.

However, this is for illustrative purposes only, and the operations of the processing part 1133, roll map PLC 1171, process PLC 1143, EIF 145, first server 150, eIoT 170, second server 180, and third server 190 described above may be caused by other devices executing computing devices, distributed computing devices, processors, firmware, software, routines and commands, and the like.

**(Second embodiment)**

In some embodiments, the roll map creation device may not generate correction data if the length of the electrode roll measured by the rotary encoder provided on the rewinder of the preceding process is substantially the same as the length of the electrode roll measured by the rotary encoder (e.g., the second rotary encoder 1125) provided on the rewinder of the corresponding process.

In some embodiments, the roll map creation device may not generate correction data if the length of the electrode roll measured by the rotary encoder provided on the rewinder of a row process differs within a predetermined error range from the length of the electrode roll measured by a rotary encoder (e.g., the second rotary encoder 1125) provided on the rewinder of the corresponding process.

In some embodiments, the roll map creation device may not generate correction data if the length of the electrode roll measured by the first rotary encoder 1121 is substantially the same as the length of the electrode roll measured by the second rotary encoder 1125.

In some embodiments, the roll map creation device may not generate correction data if the length of the electrode roll measured by the first rotary encoder 1121 differs from the length of the electrode roll measured by the second rotary encoder 1125 within a predetermined margin of error.

Although embodiments of the present disclosure have been described in detail above, one of ordinary skill in the art to which the disclosure belongs will be able to make various modifications to the disclosure without departing from the spirit and scope of the disclosure as defined in the appended claims. Accordingly, future modifications of the present disclosure will not depart from the art of the present disclosure.

**Claims**

1. A roll map creation system comprising:

   an inspection measurement device for inspecting an electrode to obtain inspection and/or measurement data while moving the electrode represented by a first roll map from an unwinder to a rewinder, the first roll map created in a preceding process; and
   a roll map creation device for creating a second roll map by assigning coordinates to the electrode, and matching the inspection and/or measurement data according to the coordinates of the electrode, wherein
   the roll map creation device is configured to create correction data of a difference in lengths when a first roll map length (A) and a second roll map length (B) differ from each other.

2. The roll map creation system of claim 1, wherein the roll map creation device is configured to map a coordinate (C) of the first roll map to a new correction coordinate (M) according to Formula (1), and the correction data includes the new correction coordinate (M).

$$M=(B \cdot C)/A \qquad (1)$$

3. The roll map creation system of claim 1, wherein the roll map creation device is configured to create an overlay roll map matching the first roll map and the second roll map using the correction data.

4. The roll map creation system of claim 3, wherein

   each of the first roll map and the second roll map comprises an absolute coordinate including coordinate values of both an electrode removal portion and a survival electrode portion remaining unremoved, and a relative coordinate including coordinate values of the survival electrode portion, wherein
   the roll map creation device is configured to map an absolute coordinate (C) of the first roll map to a new correction coordinate (M) according to Formula (1), the correction data including the new correction coordinate (M).

$$M=(B \cdot C)/A \qquad (1)$$

5. The roll map creation system of claim 4, wherein the roll map creation device is configured to create the overlay roll map by matching the new correction coordinate (M) with the absolute coordinate of the second roll map.

6. The roll map creation system of claim 4, wherein the roll map creation device is configured to update the relative coordinate of the first roll map using the correction data.

7. The roll map creation system of claim 1, wherein the inspection measurement device comprises an unwinder encoder and a rewinder encoder capable of measuring a length of an electrode.

8. The roll map creation system of claim 7, wherein the length (B) of the second roll map is a length of the electrode determined by the rewinder encoder.

9. The roll map creation system of claim 7, wherein the correction data is generated after the rewinder has wound all of the electrode.

10. The roll map creation system of claim 1, wherein

the system is configured to add correction data of a difference between an electrode length determined by the unwinder and an electrode length determined by the rewinder to the first roll map.

11. The roll map creation system of claim 1, wherein

the preceding process is an electrode coating process,
the first roll map is a roll map for the electrode coating process, and
the second roll map is a roll map for a roll-press process.

12. A roll map creation system comprising:

an inspection measurement device for inspecting an electrode to obtain inspection and/or measurement data while moving the electrode represented by a first roll map from an unwinder to a rewinder, the first roll map created in a preceding process; and
a roll map creation device for creating a second roll map by assigning coordinates to the electrode, and matching the inspection and/or measurement data according to the coordinates of the electrode,
wherein, when a first roll map length (A) and a second roll map length (B) differ from each other, the roll map creation device is configured to add correction data of a difference in lengths to the first roll map.

13. The roll map creation system of claim 12, wherein the roll map creation device is configured to map a coordinate (C) of the first roll map to a new correction coordinate (M) according to Formula (1), the correction data including the new correction coordinate (M).

$$M=(B \cdot C)/A \qquad (1)$$

14. The roll map creation system of claim 12, wherein

each of the first roll map and the second roll map comprises an absolute coordinate including coordinate values of both an electrode removal portion and a survival electrode portion remaining unremoved, and a relative coordinate including coordinate values of the survival electrode portion, wherein
the first roll map length (A) and the second roll map length (B) are lengths based on the absolute coordinates.

15. The roll map creation system of claim 12, wherein the roll map creation device is configured to create an overlay roll map matching the first roll map and the second roll map using the correction data.

16. A roll map creation method comprising:

storing a first roll map of a preceding process;
storing a second roll map of a process subsequent to the preceding process; and
creating a correction data of a difference in length if a first roll map length (A) and a second roll map length (B) differ from each other.

17. The roll map creation method of claim 16, wherein creating the correction data comprises mapping a coordinate (C) of the first roll map to a new correction coordinate (M) according to Formula (1).

$$M=(B \cdot C)/A \qquad (1)$$

18. The roll map creation method of claim 16, further comprising creating an overlay roll map matching the first roll map with the second roll map using the correction data.

[FIG. 1]

coater

roll press / slitter

notching

▽ reference point marking

⬚ reference point recognition vision

⬚ reference point recognition vision

reference point recognition vision

[FIG. 2]

[FIG. 3]

[FIG. 4]

[FIG. 5]

$$\frac{BC}{A}$$

E1

1st Roll Map

P1

2nd Roll Map

B      A      C      O

E1

Overlay Roll Map

P2

B      M      O

[FIG. 6]

## INTERNATIONAL SEARCH REPORT

| International application No. |
| --- |
| **PCT/KR2024/010655** |

**A. CLASSIFICATION OF SUBJECT MATTER**

**H01M 4/04**(2006.01)i; **G01B 21/04**(2006.01)i

According to International Patent Classification (IPC) or to both national classification and IPC

**B. FIELDS SEARCHED**

Minimum documentation searched (classification system followed by classification symbols)

H01M 4/04(2006.01); B05C 11/10(2006.01); B65H 26/02(2006.01); B65H 43/04(2006.01); B65H 75/00(2006.01); G01B 5/06(2006.01); H01M 50/531(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극(electrode), 롤투롤(roll-to-roll), 신장(extension), 롤맵(roll map), 추적(tracking), 배터리(battery)

**C. DOCUMENTS CONSIDERED TO BE RELEVANT**

| Category* | Citation of document, with indication, where appropriate, of the relevant passages | Relevant to claim No. |
| --- | --- | --- |
| A | KR 10-2023-0025288 A (LG ENERGY SOLUTION, LTD.) 21 February 2023 (2023-02-21) See paragraphs [0058]-[0061], and claims 1-15. | 1-18 |
| A | KR 10-2021-0034591 A (ITALIA TECHNOLOGY ALLIANCE S.R.L.) 30 March 2021 (2021-03-30) See paragraphs [0101] and [0212]-[0218]. | 1-18 |
| A | KR 10-2023-0026865 A (LG ENERGY SOLUTION, LTD.) 27 February 2023 (2023-02-27) See paragraphs [0050]-[0063]. | 1-18 |
| A | KR 10-2023-0066855 A (LG ENERGY SOLUTION, LTD.) 16 May 2023 (2023-05-16) See entire document. | 1-18 |
| A | KR 10-2018-0108268 A (LG CHEM, LTD.) 04 October 2018 (2018-10-04) See entire document. | 1-18 |

☐ Further documents are listed in the continuation of Box C. ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **28 October 2024** | **28 October 2024** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
| --- |
| **PCT/KR2024/010655** |

| Patent document cited in search report | | | Publication date (day/month/year) | Patent family member(s) | | | Publication date (day/month/year) |
| --- | --- | --- | --- | --- | --- | --- | --- |
| KR | 10-2023-0025288 | A | 21 February 2023 | CN | 116724406 | A | 08 September 2023 |
| | | | | EP | 4266394 | A1 | 25 October 2023 |
| | | | | JP | 2024-512864 | A | 21 March 2024 |
| | | | | JP | 7551227 | B2 | 17 September 2024 |
| | | | | KR | 10-2593244 | B1 | 25 October 2023 |
| | | | | US | 11984559 | B2 | 14 May 2024 |
| | | | | US | 2024-0047763 | A1 | 08 February 2024 |
| | | | | US | 2024-0243367 | A1 | 18 July 2024 |
| | | | | WO | 2023-018135 | A1 | 16 February 2023 |
| KR | 10-2021-0034591 | A | 30 March 2021 | BR | 112020026593 | A2 | 23 March 2021 |
| | | | | CA | 3104776 | A1 | 02 January 2020 |
| | | | | CN | 112469649 | A | 09 March 2021 |
| | | | | CN | 112469649 | B | 20 June 2023 |
| | | | | EP | 3814259 | A1 | 05 May 2021 |
| | | | | IT | 201800006680 | A1 | 26 December 2019 |
| | | | | JP | 2021-529709 | A | 04 November 2021 |
| | | | | KR | 10-2675656 | B1 | 14 June 2024 |
| | | | | MX | 2020014329 | A | 27 May 2021 |
| | | | | US | 12066816 | B2 | 20 August 2024 |
| | | | | US | 2021-0261374 | A1 | 26 August 2021 |
| | | | | WO | 2020-003114 | A1 | 02 January 2020 |
| KR | 10-2023-0026865 | A | 27 February 2023 | US | 2023-0097728 | A1 | 30 March 2023 |
| KR | 10-2023-0066855 | A | 16 May 2023 | CN | 116868359 | A | 10 October 2023 |
| | | | | EP | 4283695 | A1 | 29 November 2023 |
| | | | | JP | 2024-514744 | A | 03 April 2024 |
| | | | | KR | 10-2661396 | B1 | 29 April 2024 |
| | | | | US | 2024-0151524 | A1 | 09 May 2024 |
| | | | | WO | 2023-080747 | A1 | 11 May 2023 |
| KR | 10-2018-0108268 | A | 04 October 2018 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 2024010655 W

- KR 1020230097671